# EUROPÄISCHE PATENTSCHRIFT

(11) **EP 1 222 028 B1**
(45) Veröffentlichungstag und Bekanntmachung des Hinweises auf die Patenterteilung: **24.09.2003**
(21) Anmeldenummer: 00967871.5
(22) Anmeldetag: 13.10.2000
(51) Int. Cl.: B01L 3/00, B01J 19/00

(54) **TRÄGERPLATTE FÜR EINE GEORDNETE AUFNAHME VON PROBENPARTIKELN**
SUPPORT PLATE FOR RECEIVING OF SAMPLE PARTICLES IN AN ORDERLY MANNER
PLAQUE DE SUPPORT DESTINEE A RECEVOIR DE MANIERE ORDONNEE DES PARTICULES D'ECHANTILLON

(30) Priorität: 15.10.1999 DE 19950691
(43) Veröffentlichungstag der Anmeldung: 17.07.2002
(73) Patentinhaber: Graffinity Pharmaceuticals Aktiengesellschaft, 69120 Heidelberg (DE)
(72) Erfinder: SCHMIDT, Kristina, 69126 Heidelberg (DE); VETTER, Dirk, 69120 Heidelberg (DE)
(74) Vertreter: VOSSIUS & PARTNER
(86) Internationale Anmeldenummer: EP0010121
(87) Internationale Veröffentlichungsnummer: WO01028681

(56) Entgegenhaltungen:
- WO-A-95/01559
- WO-A-99/24834
- WO-A-99/56866
- DE-A- 3 818 614
- DE-A- 19 920 156
- DE-U- 20 009 620

## Beschreibung

Die Erfindung betrifft eine Trägerplatte für eine geordnete Aufnahme von Partikeln, wie Probenpartikeln, die insbesondere im automatisierten Laborbetrieb im Bereich der kombinatorischen Chemie von Bedeutung ist.

Es sind bereits seit Jahrzehnten Reaktionsgefäße bekannt, bei denen Probenpartikel in Form von Perlen für die Separation und Synthese im labortechnischen Bereich eingesetzt werden. Meistens handelt es sich dabei um Glas- oder Polymerkügelchen, die Durchmesser von 0,01 mm bis 1 mm, typischerweise etwa 0,1 mm, besitzen und trocken oder vorgequollen als loses Schüttgut in ein Reaktionsgefäß gefüllt und dann mit Flüssigkeit in Kontakt gebracht bzw. umspült werden, wobei zwischen der Festphasenoberfläche der Partikel und der sie umgebenden Flüssigkeit ein Adsorptions- oder Reaktionsprozeß abläuft (vgl. z.B. US-A-5 437 979). Verfahren der Säulenchromatographie (z.B. Gelfiltration), Säulenextraktion, Immundiagnostik, Biomolekülreinigung (z.B. DNA-Reinigung), sowie der homogenen und heterogenen Synthese (z.B. von Oligonukleotiden, Peptiden oder kombinatorischen Substanzbibliotheken) nutzen diese Technik aus.

Neben der Automatisierung und Miniaturisierung von Labortechniken ist deren Parallelisierung von großem Interesse, um einen höheren Probendurchsatz zu erzielen und damit langwierige Verfahren zu beschleunigen. Zu diesem Zweck werden Proben oft in einem Raster angeordnet, so daß die Identität (ZB. Herkunft, Beschaffenheit, etc.) der Probe mit einer Flächenkoordinate verknüpft werden kann.

Diese Koordinaten sind besonders für automatisierte Systeme zur Probenbearbeitung leicht zu erfassen. Für flüssige Proben sind daher sogenannte Mikrotiterplatten entwickelt worden, die Kavitäten in rechtwinkligen Anordnungen von beispielsweise 8 x 12 (96 Proben), 16 x 24 (384 Proben) oder 32 x 48 (1536 Proben) tragen. Die Abmessungen der Kavitäten dieser Probenträger richten sich dabei nach den mit handelsüblichen Geräten, wie z.B. Pipetten, verläßlich dosierbaren Volumina und unterliegen mit dem Fortschreiten der Dosiertechnologie einer kontinuierlichen Miniaturisierung.

Üblicherweise werden die genannten Probenpartikel in mit Filterböden versehenen Probenbehältern zur Reaktion gebracht. Dabei sind die Seitenwandungen bzw. Seitenwände der Probenbehälter für die zum Einsatz gelangenden Flüssigkeiten undurchlässig, und die Partikel werden auf dem Filter gehalten. Flüssigkeiten werden von oben eingetragen und nach erfolgter Umsetzung durch den Filterboden gepreßt, abgesaugt oder ablaufen gelassen. Dies macht einen Flüssigkeitstransferschritt erforderlich, da die Flüssigkeiten aus den Kavitäten entfernt und in die Partikelbehälter eingefüllt werden müssen. Hiefür werden herkömmlicherweise manuelle Pipetten oder Pipettierautomaten eingesetzt.

Der Transfer der Flüssigkeiten aus den Kavitäten der Mikrotiterplatten in die Behälter für die Probenpartikel bereitet oft Schwierigkeiten. Dies zeigt sich besonders bei Probenträgern, die stark miniaturisiert sind. Das Pipettieren in Einzelschritten ist bei Rasteranordnungen von beispielsweise über 100 Proben aufgrund des hohen Zeitbedarfs meist nicht mehr praktikabel. Statt dessen finden Pipettierautomaten Anwendung, die mehrfach parallel aspirieren und dispensieren können. Solche Automaten besitzen beispielsweise 96 gleichzeitig arbeitende pipettenartige Kolbenhubvorrichtungen. Nachteilig ist jedoch, daß die Geometrie und das Rastermaß der Pipettiervorrichtung oft nicht dem der Probenvorlage bzw. Probenaufnahme entspricht. Dies gilt besonders für neuartige, besonders dicht gepackte Rasterformate. Dieses Problem kann zwar unter Umständen in dem Fall, gemäß dem die Abmessungen der Raster der Pipettiervorrichtung und der Probenträger ganzzahlige Vielfache darstellen umgangen werden, indem der Pipettierroboter seriell mehrfache Befüllvorgange abarbeitet. Beispielsweise können sechzehn herkömmliche Mikrotiterplatten mit 96 flüssigen Proben in sechzehn Transferschritten auf eine miniaturisierte Titerplatte mit 1536 Kavitäten umgruppiert werden. Hierbei ist jedoch wiederum ein Zeitverlust hinzunehmen, der sich bei reaktionskinetisch sensiblen Umsetzungen ungünstig auswirkt.

Neben den vorstehend beschriebenen technischen Lösungen sind weitere Mikrotiterplatten bzw. Vorrichtungen, die in Mikrotiterplatten eingebracht werden sollen, bekannt. So ist beispielsweise in der EP-A-0 296 475 eine Titerplatte beschrieben, die mit Einsätzen aus biochemisch kompatiblen, mikroporösen Oberflächen versehen ist, an die sich biologisches Material anbinden kann. Diese Titerplatte ist so ausgestaltet, daß sie in ein Spektrometer einbringbar ist.

In der US-A-5 417 923 ist eine Anordnung zur Aufnahme mehrerer Proben offenbart, die aus einer Test- und einer Sammelplatte besteht. Die Testplatte weist Kammern auf, die mit chromatografischem Material zwischen zwei Fritten gefüllt sind.

In der WO-A-96/39250 ist eine Filtrationsvorrichtung beschrieben, die mit Öffnungen versehene ne Seitenwände aufweist, denen Membranfilter vorgeordnet sind, wobei der Bodenbereich der dortigen Aufnahmen ausdrücklich von Filterkörpern freigehalten wird, um ein Verlangsamen der Filtration durch eine Barriere auf der Membran zu vermeiden.

Die WO-A-93100420 offenbart eine Vorrichtung zur Behandlung von Gewebekulturen, die u.a. eine Filterplatte enthält, in die Gefäße einbringbar sind, die einen geschlossenen Wandungsbereich und einen mit einem Filter versehenen Boden aufweisen. Weiterhin sind dort Mittel vorgesehen, die eine Positionierung der Bodenbereiche der Gefäße in bezug auf die Titerplatte zwecks Minimierung von Kapitlarkräften bewirken.

Die DE-U-91 00 320 beschreibt eine Mikrotestplatte mit mehreren Aufnahmekammern, in die auf einer Pinplatte angeordnete Pins einbringbar sind. Die Pins sind dabei mit Antigenen bzw. Allergenen oder dergleichen beladen und ihre Anordnung auf der Pinplatte korrespondiert mit der Anordnung der Aufnahmekammern der Mikrotestplatte.

Eine weitere Titerplatte ist in der DE-A-33 36738 beschrieben. Sie weist separat austauschbare Einsätze auf, die der Aufnahme von Zapfen dienen, die vergleichbar zu der DE-U-91 00 320 auf einer weiteren Platte angeordnet sind, wodurch sich ebenfalls eine allseits geschlossene Anordnung ergibt.

Schließlich ist der WO A-94/28111 eine Vorrichtung für Gewebekulturen zu entnehmen, die mehrere Einsätze mit ebenfalls seitlich geschlossenen Wänden und einem porösen Boden aufweist. Diese Lösung ist vergleichbar mit der zuvor zitierten WO A-93/00420.

Ferner offenbart die DE-A-199 20 156 eine Trägerplatte für die geordnete Aufnahme einer Vielzahl von Probenpartikeln. Diese Druckschrift wurde nach dem Anmeldetag bzw. Prioritätstag der vorliegenden Anmeldung veröffentlicht. Bei dieser Trägerplatte sind die Kavitäten derart ausgebildet, daß sie jeweils nur die Aufnahme eines Mikropartikels ermöglichen.

Die nach dem Stand der Technik üblichen Polypropylengefäße mit siebartigen Außenwänden zur Aufnahme und Halterung von Partikeln sind üblicherweise mit einem Deckel verschlossen. Diese Gefäße sind so dimensioniert, daß sie z.B. in herkömmliche 96er Mikrotiterplatten eingesetzt werden können. Die Trägerobjekte bieten die Möglichkeit, Streifen oder Felder mit einsortierten Partikeln bereitzustellen, die in Ihren Abmaßen auf 96er Mikrotiterplatten angepaßt sind. Ein Nachteil solcher Anordnungen besteht unter anderem darin, daß es zum einen nicht möglich ist, eine definierte Anzahl von Probenpartikeln (hier: Harzpartikel) pro Gefäß zu gewährleisten, und zum anderen eine Miniaturisierung solcher Trägerobjekte beispielsweise für 1536er Mikrotiterplatten in dieser Art zu realisieren.

Bei den bekannten Trägerplatten, deren Kavitäten einen oder mehrere Probenträger aufnehmen können, die jedoch nach oben geöffnet sind, ist es nachteilig, daß beim Befüllen der Kavität mit Flüssigkeit die Partikel mit herausgespült werden. Daher ist bei Verwendung solcher Trägerplatten immer eine zusätzliche Abdeckung nach oben erforderlich, die den Flüssigkeitsaustausch zwischen Kavität und Umgebung erlaubt und die Partikel in der Kavität zurückhält. Zum Einsatz kommen hierbei poröse Materialien oder es wird über der Kavität ein Spalt erzeugt, der einen Flüssigkeitsdurchtritt erlaubt, ein Herausspülen der Partikel jedoch verhindert. Die erwähnten Abdeckungen behindern durch ihre Filterwirkung jedoch den Flüssigkeitsaustausch zwischen Kavität und Umgebung. Ein gegebenenfalls mehrfaches und schnelles Befüllen der Kavitäten, wie dies bei Waschvorgängen wünschenswert ist, kann somit nicht erfolgen. Diese Trägerplatten können nicht ohne Abdeckung in Flüssigkeiten getaucht werden, wenn sich in den Kavitäten einsortierte Perlen befinden, was deren Handhabbarkeit drastisch einschränkt.

Der Erfindung liegt die Aufgabe zugrunde, eine verbesserte Trägerplatte bereitzustellen, die insbesondere eine geordnete Aufnahme von Probenpartikeln und eine Anordnung von Partikeln in einem regelmäßigen positionsadressierbaren Raster erlaubt. Diese Aufgabe wird mit den Merkmalen der Patentansprüche gelöst.

Die Erfindung geht dabei von dem Grundgedanken aus, die bekannten Trägerplatten dahingehend zu verbessern, daß in einem vorgesehenen Raster Kavitäten ausgebildet sind, die eine bevorzugt vorgebbare Anzahl von Partikeln aufzunehmen gestatten und die diese Partikel ohne zusätzliche, die Kavitäten verschließende Abdeckungen zumindest in Teilprozeßschritten (z.B. während einer Flüssigkeits- oder Gasführung über die Trägerplatte, dem Befüllen der Kavitäten mit Flüssigkeit oder Gas, dem Aufnehmen, Transport und Ablegen der Trägerplatte) am Verlassen der Kavitäten hindern.

Bevorzugte Ausführungsformen der Erfindung werden nachstehend unter Bezugnahme auf die Zeichnungen näher erläutert Es zeigen:
- Fig. 1: einen stark vergrößerten Ausschnitt einer Trägerplatte in Draufsicht; und
- Fig. 2 - 11: verschiedene Ausführungsformen von Kavitäten und vorgesehener Abdeckungen.

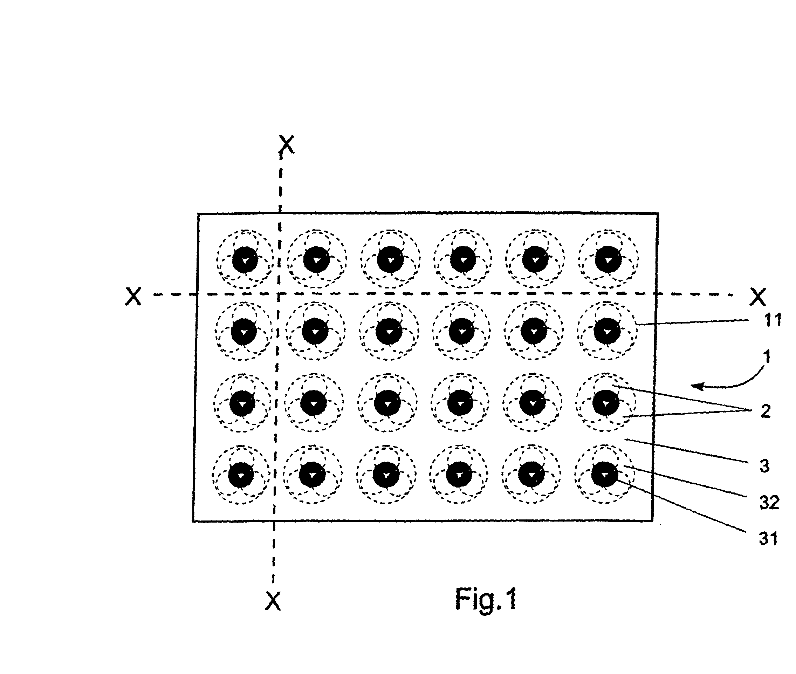

Eine erfindungsgemäße Trägerplatte ist im wesentlichen aus einem Träger 1 aufgebaut, der übtichervveise wenigstens sechsundneunzig in einem regelmäßigen, kartesischen Raster eingebrachte Kavitäten 11 aufweist. Der Träger 1 hat beispielsweise ein Außenmaß von etwa 250 mm x 250 mm, wobei der Durchmesser von in die Kavitäten 11 zu verbringenden Partikeln 2 beispielsweise etwa 100 µm betragen könnte. Auf diese Weise können bis zu 400.000 Kavitäten 11 in dem Träger 1 vorgesehen sein. Ein Ausschnitt aus einer derartigen Trägerplatte ist in Figur 1 in Draufsicht dargestellt. Dabei liegt der eigentliche Träger 1 im Zeichnungshintergrund. Die in Fig. 1 gestrichelt dargestellten Kavitäten 11 sind bezüglich ihrer Form und Größe so ausgebildet, daß sie wenigstens zwei Probenpartikel 2 aufnehmen können, wobei in der in Fig. 1 dargestellten Ausführungsform drei aufgenommene Partikel 2 dargestellt sind.

Bevorzugt gelangen im Rahmen der Erfindung elastisch verformbare und/oder bei Einwirkung der für Wasch- oder Syntheseprozesse zum Einsatz gelangenden Flüssigkeiten quellbare Probenpartikel zum Einsatz. Es ist verständlich, daß je nach Ausbildung der Kavität 11 eine definiert vorgebbare Anzahl von Partikeln 2, vornehmlich im wesentlichen identischen Durchmessers, in jede Kavität 11 verbringbar sind.

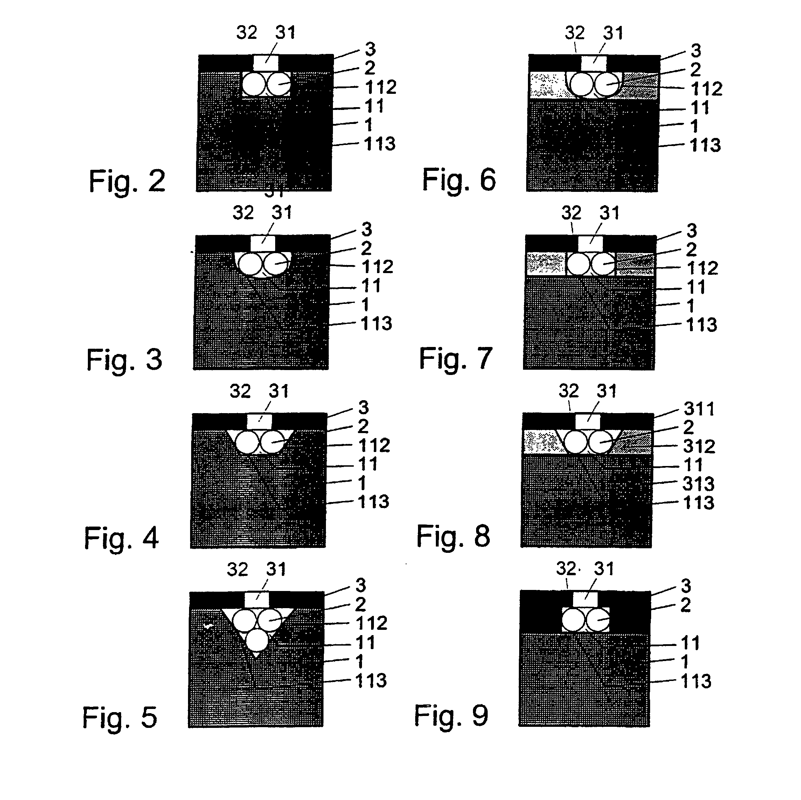

Jeder der Kavitäten 11 ist eine Abdeckung 3 zugeordnet, die eine Üffnung 31 aufweist, die so bemessen ist, daß sie im wesentlichen den Durchmessern der Probenpartikel 2 entspricht. Dadurch kann beim Befüllen jeweils nur ein Partikel 2 in eine entsprechende Kavität 11 eingebracht werden. Die einzelnen Kavitätenausnehmungen sind ferner derart ausgebildet, daß beim Erreichen der maximal möglichen Partikelaufnahmekapazität alle Partikel 2 durch einen Überhang 32, die Ausbildung eines entsprechend geformten Kavitätenbodens 113 bzw. einer entsprechend geformten Kavitätenwandung 112 und/oder die Positionierung der Partikel 2 zueinander, in den Kavitäten 11 gehalten sind, wie es in den Figuren 2 bis 11 angedeutet ist.

Die beschriebenen Voraussetzungen sind in Fig. 1 schematisch dargestellt, wobei dort die Abdeckung 3 den Träger 1 im wesentlichen ganzflächig überspannt und zentrisch über jeder Kavität 11 eine Öffnung 31 und ein diese umfassender und den Randbereich der Kavität 11 abdeckender Überhang 32 vorgesehen sind. Durch die Öffnung 31 sind die in Fig. 1 schwarz dargestellten Partikelteile erkenntlich, wohingegen die von der Abdeckung 3 verdeckten Partikelteile gestrichelt gezeichnet sind.

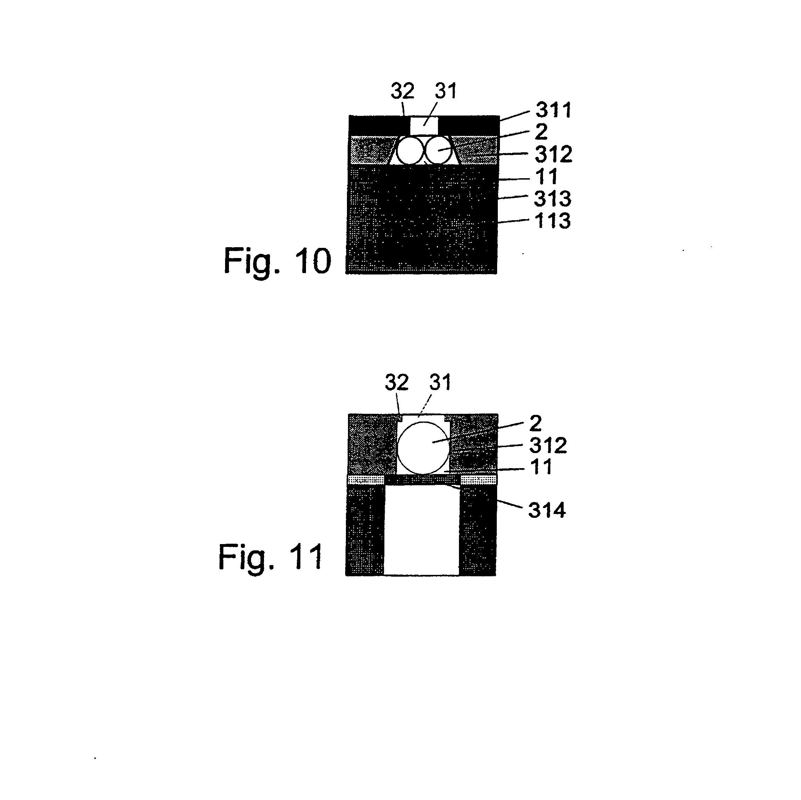

Für die Form der Öffnungen 31 sind prinzipiell keine Beschränkungen erforderlich, solange sichergestellt ist, daß jeweils nur ein Partikel 2 eingebracht werden kann und bevorzugt bei Ausschöpfung der Kapazität keine Partikel 2 austreten können. Runde oder quadratische Ausnehmungen sind jedoch bevorzugt Die Größe und Form der Kavitäten 11 sowie der Durchmesser und die Form der Partikel 2 legen die Anzahl der pro Kavität 11 einbringbaren Partikel 2 fest. Die Kavitäten 11 können ebenfalls jegliche Form annehmen, wobei - je nach Herstellungstechnologie - runde oder quadratische Querschnitte in Draufsicht bevorzugt sind. Entsprechend bevorzugter Ausführungsformen sind Kavitätsprofile im Querschnitt mit Wandneigungswinkeln zwischen 30° und 90° vorgesehen. Die Öffnung 31 in der Abdeckung 3 erlaubt, daß die Probenpartikel 2 einzeln in die Kavität 11 einsortierbar sind, was durch Überschüttung der gesamten Trägerplatte mit einer Vielzahl von Partikeln und deren Einstreichen mittels eines rakelartigen Streitwerkzeugs erreichbar ist Jeder einsortierte Partikel wird beim Eintragen vom nachfolgenden Partikel seitlich unter den Überhang 32 geschoben. Wenn die maximale Anzahl der einsortierbaren Partikel 2 erreicht ist, sind diese so angeordnet, daß sie die Kavität ohne Entfernen des Überhangs 32 nicht mehr verlassen können. Um ein irreversibles Festhalten der Partikel 2 in den Kavitäten 11 zu garantieiren, muß somit wenigstens ein Partikel 2 pro Kavität 11 einsortiert sein, wobei in diesem Fall für die Probenpartikel 2 solche aus einem elastischen und/oder quellbaren Material eingesetzt sind, so daß sich diese, wie im Beispiel gemäß Fig. 11 gezeigt, gegen die durch die Folienlage 312 gebildete Kavitätenwandung klemmen.

Im Fall der Ausbildung der Kavitätengeometrie derart, daß mehrere Probenpartikel 2 aufgenommen werden können, ist die vorstehend unter Bezugnahme auf Fig. 11 genannte Voraussetzung keine notwendige Bedingung, so daß zB. auch nicht-elastisch verformbare Metall-Beads zur Anwendung gelangen könnten.

Im Beispiel nach Fig. 1 finden genau drei kugelförmige Partikel 2 mit einem Durchmesser von etwa 100 µm bei einer Ausgestaltung der Kavität 11 mit kreisrundem Querschnitt und mit einer Tiefe von etwa 100 µm bei einem Durchmesse von etwa 215 µm Platz

Partikel 2 mit einen Durchmesser unter 1 mm besitzen im allgemeinen ein ungünstiges Verhältnis von Volumen zu Oberfläche, was zu einem Aneinanderhaften mehrerer Partikel untereinander führt, wodurch ein Dosieren oder Verteilen dieser durch Vorrichtungen nach bekanntem Stand der Technik erschwert wird. Diese Nachteile werden ebenfalls von der erfindungsgemäßen Trägerplatte gelöst. Daher ist ein Durchmesser der einzusortierenden Partikel in einem Bereich von 0,01 mm bis 1 mm im Rahmen der Erfindung besonders bevorzugt.

Handelt es sich bei den Probenpartikeln um Perlen eines Syntheseharzes, lassen sich die in den Kavitäten 11 gehalterten Partikel 2 während einer Synthese mit Flüssigkeiten benetzen und umspülen. Dabei gelangen die Flüssigkeiten durch die Öffnung 31 der Abdeckung 3 unter den Überhang 32 an die Probenpartikel 2. Der Flüssigkeitsaustausch innerhalb der porösen Partikel 2 erfolgt durch Diffusion. Auch bei starker Flüssigkeitsbewegung über der Kavität 11 werden die Partikel fest in der Kavität 11 gehalten. Hierbei wirkt sich ein Quellen der Partikel 2 vorteilhaft auf das klemmende Festhalten in der Kavität aus. Bei Einbringen von Partikeln 2 in gequollenem Zustand muß darauf geachtet werden, daß bei Flüssigkeitswechsel ein Schrumpfen der Partikel ausreichend berücksichtigt und/oder vermieden wird, um das gegenseitig klemmende Festhalten der Partikel 2 nicht aufzuheben.

Auch ist bei einer entsprechenden Geometriefestlegung der Kavität, wie aus Fig. 5 ersichtlich, im Rahmen der Erfindung eine mehrlagige Partikeleinbringung und -halterung möglich.

Die im Rahmen der Erfindung erreichte relativ feste Halterung der Probenpartikel 2 in den Kavitäten 11 erlaubt die mechanische Bearbeitung der Trägerplatte nach dem Einsortieren der Partikel 2. Damit ist es möglich, die Trägerplatte vor oder nach einer Synthese in Abschnitte bzw. Kompartimente zu zerteilen. Dadurch können sowohl Trägerobjekte mit mehreren Kavitäten als auch mit nur einer einzelnen Kavität, die nur eine Probe trägt, hergestellt werden, was durch die beispielhaft angedeuteten Schnittlinien X-X in Fig. 1 veranschaulicht werden soll.

Eine ebenfalls im Rahmen der Erfindung mögliche Ab- oder Zufuhr von Flüssigkeiten oder Gas kann beispielsweise auch, wie in Fig. 11 dargestellt, durch siebartig oder porös ausgebildete Böden 314 der die Probenpartikel 2 haltenden Kavitäten 11 erfolgen.

Zur Herstellung der erfindungsgemäßen Trägerplatten mit einer Vielzahl von Kavitäten 11 für eine geordnete Aufnahme von Probenpartikeln, wobei die Kavitäten 11, die Öffnungen 31 und die Überhänge 32 sowohl in ihrer Geometrie als auch in ihren räumlichen Abständen zueinander sehr präzise gefertigt werden müssen, werden bevorzugt Fotolithographievertahren, galvanische Abscheideverfahren, mechanische Bearbeitungsverfahren oder Ätztechniken eingesetzt. Durch die Wahl der entsprechenden Herstellungstechnologie lassen sich unterschiedlichen Kavitätengeometrien erreichen, wie es beispielhaft in den Figuren 2 bis 11 angedeutet ist.

Nachfolgend sind bevorzugte Herstellungsmethoden für die Herstellung erfindungsgemäßer Trägerplatten beschrieben, ohne daß die Erfindung darauf beschränkt ist.

Runde oder quadratische Kavitäten 11 mit senkrechten Wänden lassen sich beispielsweise in fotostrukturierbarem Glas herstellen. Mittels W-Belichturig und Temperaturbehandlung werden im Glas Bereiche kristallisiert. Diese Kristallphase kann mittels Ätzen aus dem Glas herausgelöst werden. Die Tiefe der Kavitäten 11 wird durch die Ätzzeit definiert. Nach einer Belichtung und Temperung wird auf das Trägennaterial eine UV-belichtbare Abdeckschicht zur Bildung der partiellen Abdeckung 3 aufgetragen und runde oder quadratische Öffnungen 31 in einem gesonderten Strukturierungsschritt erzeugt. Ebenso kann eine die Öffnungen 31 bereits tragende vorstrukturierte Folie auf das Glas aufgebracht werden. Durch die Öffnungen 31 der partiellen Abdeckung 3 erfolgt dann das Ätzen der darunter befindlichen Kristallphase (vgl. Figur 2).

Ferner lassen sich Z.B. runde oder quadratische Kavitäten 11 mit abgerundeten Ecken in einem massiven Bulkmaterial mit konvex geformten Wänden aus Silizium, Glas oder Metallen mittels isotroper Ätzverfahren herstellen. Für die Herstellung solcher Strukturen wird in einem ersten Schritt auch hier eine UV-belichtbare Abdeckschicht aufgetragen und runde oder quadratische Öffnungen erzeugt. Anstelle der Abdeckschicht kann auch eine weitere Metallschicht verwendet werden, die jedoch eine ausreichende Dicke aufweisen sollte, damit der geforderte Überhang 32 garantiert wird, oder es wird eine vorstrukturierte Folie aufgebracht Sollen die Öffnungen 31 beispielsweise einen Durchmesse von ca. 100 µm zum Durchlaß von Partikeln 2 mit einem Durchmesser von etwa 100 µm aufweisen und soll die Kavität so beschaffen sein, daß sie drei Partikel aufzunehmen gestattet, sollte die genannte Abdeckschicht eine Dicke von etwa 10 bis 20 µm nicht unter- und eine Dicke von etwa 90 µm nicht überschreiten.

Sollen die Öffnungen 31 beispielsweise einen Durchmesser von ca. 1 mm zum Durchlaß von Partikeln 2 mit einem Durchmesser von etwa 1 mm aufweisen und soll die Kavität so beschaffen sein, daß sie drei Partikel aufzunehmen gestattet, sollte die genannte Abdeckschicht eine Dicke von etwa 0,02 mm nicht unter- und eine Dicke von etwa 0,9 mm nicht überschreiten.

Bei Einsatz von Glas kann als Material für die partielle Abdeckung 3 auch <100> Silizium verwendet werden, wobei hier die Öffnungen 31 sowohl runde Geometrien (zB. hergestellt durch isotropes Ätzen bzw. Trockenätzen) oder quadratische Geometrien mit einem Wandneigungswinkel von beispielsweise 54° (hergestellt durch anisotropes Ätzen) aufweisen können. Das darunter befindliche Glas wird dann isotrop geätzt und erhält eine runde oder quadratische Form mit abgerundeten Ecken.

Bei Verwendung von Silizium als Bulkmaterial für den Träger 1 und Glas als Material für die Abdeckung 3 werden das Glas mittels Trockenätztechniken oder naßchemischem Ätzen runde oder quadratische Öffnungen 31 eingebracht und das darunter befindliche Silizium mittels isotropern Ätzen strukturiert. Die Tiefe der Kavitäten ist durch die Ätzzeit festlegbar.

Kavitäten mit einem Wandneigungswinkel von beispielsweise 54° lassen sich in Silizium mittels anisotropem Ätzen herstellen. Als Material für die Abdeckung 3 kann hierbei eine UV-belichtbare Abdeckschicht aufgetragen und runde oder quadratische Öffnungen 31 erzeugt werden oder es wird Glas verwendet und wie vorstehend beschrieben strukturiert. Ebenso kann eine die Öffnungen 31 bereits tragende vorstrukturierte Folie aufgebracht werden. Die Kavität wird auch hier erst in einem zweiten Schritt hergestellt (vgl. beispielsweise Fig. 4 und 5).

Runde oder quadratische Kavitäten 11 mit abgerundeten Ecken mit konvex geformten Wänden 112 lassen sich in einem Schichtmaterial, dessen Dicke genau der Tiefe der Kavitäten 11 entspricht aus Metallen mittels Ätzverfahren herstellen. Die Metallschicht 3 befindet sich dabei auf einem Träger 1. Entsprechende Schichtaufbauten sind aus der Leiterplattentechnologie bekannt und bewährt, wie zum Beispiel Kupfer auf Epoxy/Glasfaserlaminat.

Für die Herstellung solcher Strukturen wird in einem ersten Schritt eine UV-belichtbare Abdeckschicht aufgetragen und runde oder quadratische Öffnungen 31 erzeugt. Anstelle der Abdeckschicht kann auch eine weitere Metallschicht verwendet werden, die auch hier eine entsprechende Dicke, wie zu Fig. 3 ausgeführt, aufweisen muß, damit ein Überhang 32 garantiert ist oder es wird eine vorstrukturierte Folie aufgebracht. In einem zweiten Schritt wird dann die Metallschicht geätzt und es entstehen runde Kavitäten mit konvex geformten Wänden (vgl. Fig. 6).

Eine in Figur 7 dargestellte Form läßt sich mittels galvanischer Abscheidung verschiedener Metalle auf einem Träger 1 herstellen. Der Überhang 32 der Abdeckung 3 wird dann aus einer zusätzlichen Schicht gebildet, die bereits die Öffnungen 31 tragen kann oder die Öffnungen 31 werden in einem anschließendem Ätzschritt (z.B. naßchemisches Ätzen oder Trockenätzen) oder mittels Laserabtrag hergestellt. Als Material können vorzugsweise Metalloder Polymerfolien Verwendung finden.

Bei Verwendung vorstrukturierter Folien kann ebenfalls die in Figur 8 dargestellte Form realisiert werden. Hierbei werden drei Lagen Folien miteinander verbunden. Die erste Folienlage 311 trägt die kleine Öffnung 31, die den Überhang 32 der Abdeckung 3 darstellt. In der darunterliegenden Lage 312 werden Löcher eingebracht, die später als Kavitäten 11 für die Probenpartikel 2 dienen und die dritte Lage als Basismaterial 313 wird unstrukturiert verwendet und definiert den Boden der Trägerplatte. Die Lochstrukturen können beispielsweise mittels Bohren oder Laserbearbeitung in die Schichten eingebracht werden. Die Lagen werden nach ihrer Strukturierung miteinander mittels Verschweißen oder Verkleben verbunden.

Eine weitere bevorzugte Ausführungsform unter Verwendung der Laserbearbeitung sieht die Strukturierung der Lage 312 vor, nachdem diese auf das Basismaterial 313 aufgebracht wurde. Danach wird die Lage 311 aufgebracht und ebenfalls anschließend strukturiert. Bevorzugt wird hierbei für die Schichten 311, 312, 313 das gleiche Material verwendet, insbesondere Polypropylen oder Polyethylen.

Mit der beschriebenen Technologie lassen sich auch zu den vorstehend beschriebenen Kavitätengeometrien inverse Geometrien ausbilden, vgl. Fig. 10.

Sollen sehr große Stückzahlen gefertigt werden, kann es sinnvoll sein, Prägetechnologien zum Abformen von Polymeren für die Herstellung der Kavitäten 11 einzusetzen. Die Kavitäten 11 können dann beliebige Formen mit beliebig gestalteter Wandneigung und -krümmung aufweisen (vgl. Fig. 6, 7 und 8). Der Überhang 32 der Abdeckung 3 wird auch hier in einem zweiten Schritt aufgebracht, wieder in Form einer Folie, die vorstrukturiert sein kann oder erst nach dem Auftragen strukturiert wird. Beim Fügen der Folie mit dem Grundmaterial ist eine flüssigkeitsdichte Verbindung zu garantieren.

Die Herstellung der Kavität 11 und dem Überhang 32 der Abdeckung 3 in einer einzigen Schicht ist in Fig. 9 dargestellt. Hierfür werden z.B. entweder Prägetechniken eingesetzt und die Schicht wird in Kunststoffen abgeformt oder die Struktur wird durch Bohren hergestellt, wobei dann das Material frei wählbar ist. Nach Herstellung der strukturierten Schicht wird diese auf einen Träger 1 verschweißt oder verklebt.

## Patentansprüche

1. Trägerplatte für eine geordnete Aufnahme von Partikeln (2) mit:
(a) einem mit mindestens einer Kavität (11) versehenen Träger (1) zur Aufnahme der Partikel (2), wobei die Kavität (11) in ihrer Form und Größe zur gleichzeitigen Aufnahme von mindestens zwei Partikeln (2) ausgebildet ist; und
(b) einer am Träger vorgesehenen Abdeckung (3) zum Halten der Partikel (2) in der Kavität (11), wobei jeder Kavität (11) mindestens eine Öffnung (31) in der Abdeckung (3) derart zugeordnet ist, daß ein Partikel (2) durch die Öffnung (31) gebracht werden kann, und wobei an der Öffnung (31) mindestens ein überhängender Abschnitt (32) derart ausgebildet ist, daß beim Erreichen der maximal möglichen Partikelaufnahmekapazität jeder kavität alle Partikel (2) durch den überhängenden Abschnitt (32) in jeder Kavität (11) gehalten werden, wobei die Öffnung (31) einen Durchmesser hat, der im wesentlichen dem Durchmesser des Partikels (2) entspricht.

2. Trägerplatte nach Anspruch 1, wobei die mindestens zwei Partikel (2) zusätzlich durch die Ausbildung des Kavitätenbodens (113), der Kavitätenwandung (112) und/oder die Positionierung der Partikel (2) zueinander in den Kavitäten (11) gehalten werden.

3. Trägerplatte nach Anspruch 1 oder 2, wobei die Kavitäten (11) in einem sich regelmäßig wiederholenden Muster angeordnet sind.

4. Trägerplatte nach einem der Ansprüche 1 bis 3, wobei die Abdeckung (3) einteilig ausgebildet ist.

5. Trägerplatte nach einem der Ansprüche 1 bis 4, wobei der mindestens eine überhängende Abschnitt (32) in Form eines sich über die Kavität (11) erstreckenden Ringes ausgebildet ist.

6. Trägerplatte nach einem der Ansprüche 1 bis 4, wobei der mindestens eine überhängende Abschnitt (32) in Form mindestens eines sich stegartig über die Kavität (11) erstreckenden Vorsprungs ausgebildet ist.

7. Trägerplatte nach einem der Ansprüche 1 bis 6, wobei Wandungen (112) der Kavitäten (11) mit einem Wandneigungswinkel zwischen etwa 20° und 120°, bevorzugt zwischen etwa 30° und 90° zur Horizontalen ausgebildet sind.

8. Trägerplatte nach einem der Ansprüche 1 bis 7, wobei Wandungen (112) der Kavitäten (11) zumindest abschnittsweise konkav und/oder konvex ausgebildet sind.

9. Trägerplatte nach einem der Ansprüche 1 bis 8, wobei den Kavitäten (11) ein der Öffnung (31) zugewandter kreisförmiger oder quadratischer Querschnitf gegeben ist.

10. Trägerplatte nach einem der Ansprüche 1 bis 9, wobei die Kavitäten (11) mit senkrechten Wandungen (112) versehen sind.

11. Trägerplatte nach einem der Ansprüche 1 bis 10, wobei die Öffnung (31) der Abdeckung (3) einen Durchmesser zwischen etwa 0,01 mm und 1 mm aufweist.

12. Trägerplatte nach einem der Ansprüche 1 bis 11, wobei der Träger (1) aus einem mit einer Folienlage (312) versehenen Basismaterial (313), insbesondere einem Glasfaserlaminat, aufgebaut ist, wobei die Kavitäten (11) in der Folienlage (312) ausgebildet sind und die Folienlage mit einem Photoresist oder einer weiteren Folienlage (311) überzogen ist, der/die mit den Öffnungen (31) versehen ist und somit die Abdeckung (3) bildet.

13. Trägerplatte nach einem der Ansprüche 1 bis 12, wobei der Träger (1) mit der Abdeckung (3) entlang von zwischen benachbarten Kavitäten (11) verlaufenden Linien (X-X) in Kompartimente mit beliebiger Größe bis hin zu einer einzelnen Kavität (11) zerteilbar ist.

14. Trägerplatte nach einem der Ansprüche 1 bis 13, wobei sämtliche die Trägerplatte bildende Schichten (311, 312, 313) aus dem gleichen Material bestehen.

15. Trägerplatte nach Anspruch 14, wobei alle Schichten (311, 312, 313) aus Polypropylen oder Potyethylen bestehen.

16. Trägerplatte nach einem der Ansprüche 1 bis 13, wobei der Träger (1) und die Abdeckung (3) aus unterschiedlichen Materialien gebildet sind.

17. Trägerplatte nach Anspruch 16, wobei der Träger (1) ein- oder mehrschichtig ist und die Schichten) unabhängig voneinander vorzugsweise Glas, Silicium, Metall oder ein Polymer aufweisen.

18. Trägerplatte nach Anspruch 16 oder 17, wobei die Abdeckung (3) Metall- oder Polymerschichten aufweist.

19. Trägerplatte nach einem der Ansprüche 1 bis 18, wobei die Böden (314) der die Partikel (2) haltenden Kavitäten (11) siebartig oder porös ausgebildet sind.

20. Trägerplatte nach einem der Ansprüche 1 bis 19, wobei der Träger (1) und/oder die Abdeckung (3) mittels Fotolithographie, galvanischer Abscheidung, mechanischer Bearbeitung, Laserbearbeitung und/oder Ätztechniken bereitgestellt wird.

21. Verwendung einer Trägerplatte nach einem der Ansprüche 1 bis 20 für Zwecke der kombinatorischen Chemie.

22. Verfahren zur Herstellung einer Trägerplatte für eine geordnete Aufnahme von Partikeln (2) nach einem der Ansprüche 1 bis 20 mit den Schritten:
(a) Bereitstellen eines Trägers (1);
(b) Ausbilden mindestens einer Kavität (11) im Träger (1) zur Aufnahme der Partikel (2), wobei die Kavität (11) in ihrer Form und Größe zur gleichzeitigen Aufnahme von mindestens zwei Partikeln (2) ausgebildet werden;
(c) Aufbringen einer Abdeckung (3) auf den Träger zum Halten der Partikel (2) in der Kavität (11); und
(d) Ausbilden mindestens einer Öffnung (31) je Kavität (11) in der Abdeckung (3) derart, daß ein Partikel (2) durch die Üffnung (31) gebracht werden kann, wobei an der Öffnung (31) mindestens ein überhängender Abschnitt (32) derart ausgebildet wird, daß beim Erreichen der maximal möglichen Partikelaufnahmekapazität jeder kavität alle Partikel (2) durch den überhängenden Abschnitt (32) in jeder Kavität (11) gehalten werden, wobei die Öffnung (31) mit einem Durchmesser ausgebildet wird, der im wesentlichen dem Durchmesser des Partikels (2) entspricht.

23. Verfahren nach Anspruch 22, wobei der Träger (1) aus einem mit einer Folienlage (312) versehenen Basismaterial (313), insbesondere einem Glasfaserlaminat, aufgebaut wird, wobei die Kavitäten (11) in der Folienlage (312) ausgebildet werden und die Folienlage mit einem Photoresist oder einer weiteren Folienlage (311) überzogen wird, der/die mit den Öffnungen (31) versehen wird und somit die Abdeckung (3) bildet.

24. Verfahren zum geordneten Einbringen von Partikeln (2) in eine Trägerplatte mit mindestens einer Kavität (11) zur gleichzeitigen Aufnahme von mindestens zwei Partikeln (2) nach einem der Ansprüche 1 bis 20 mit den Schritten:
(a) Aufbringen einer Vielzahl der Partikel (2) auf die Trägerplatte;
(b) Einstreichen der auf der Trägerplatte befindlichen Partikel (2) in jeweilige Kavitäten (11), wobei die Partikel (2) aufgrund der Größe und Form von in einer Abdeckung (3) der Trägerplatte vorgesehenen Öffnungen (31) einzeln in die Kavitäten eingebracht werden; und
(c) Einstreichen der Partikel (2) bis in jeder Kavität (11) der Trägerplatte eine vorbestimmte Kavitätenkapazität von mindestens zwei Partikeln (2) erreicht ist.

25. Verfahren nach Anspruch 24 zum Einbringen der Partikel (2) in eine Trägerplatte nach einem der Ansprüche 1 bis 16.

26. Verfahren nach Anspruch 24 oder 25, wobei die Partikel (2) aus einem elastischen und/oder quellbaren Material gebildet sind.

## Claims

1. A carrier plate for receiving particles (2) in an orderly manner comprising:
(a) a carrier (1) having at least one well (11 ) for receiving the particles (2), wherein the shape and size of the well (11) are selected such that at least two particles (2) can be received simultaneously; and
(b) a cover (3) provided on the carrier for holding the particles (2) in the well (in ), wherein at least one opening (31) in the cover (3) is allocated to each well (11) in such a way that a particle (2) can be inserted through the opening (31), and wherein at least one projecting portion (32) is formed at the opening (31) in such a way that, when the maximally possible particle receiving capacity of each well is reached, all particles (2) are held in each well (11) by the projecting portion (32), wherein the opening (31) has a diameter essentially corresponding to the diameter of the particle (2).

2. The carrier plate according to claim 1, wherein the at least two particles (2) are additionally held in the wells (11) by the configuration of the well bottom (113), the well wall (112) and/or the position of the particles (2) with respect to each other.

3. The carrier plate according to claim 1 or 2, wherein the wells (11) are arranged in a regularly repeating pattern.

4. The carrier plate according to any one of claims 1 to 3, wherein the cover (3) is formed as one piece.

5. The carrier plate according to any one of claims 1 to 4, wherein the at least one projecting portion (32) is formed as a ring extending over the well (11).

6. The carrier plate according to any one of claims 1 to 4, wherein the at least one projecting portion (32) is formed as at least one projection extending in a web-like manner over the well (11).

7. The carrier plate according to any one of claims 1 to 6, wherein walls (112) of the wells (11) have a wall inclination angle of between about 20° and 120°, preferably between about 30° and 90° with respect to the horizontal line.

8. The carrier plate according to any one of claims 1 to 7, wherein at least portions of walls (112) of the wells (11) have a concave and/or convex shape.

9. The carrier plate according to any one of claims 1 to 8, wherein the wells (11) have a circular or square cross-section facing the opening (31).

10. The carrier plate according to any one of claims 1 to 9, wherein the wells (11) have vertical walls (112).

11. The carrier plate according to any one of claims 1 to 10, wherein the opening (31) of the cover (3) has a diameter of between about 0.01 mm and 1 mm.

12. The carrier plate according to any one of claims 1 to 11, wherein the carrier (1) is made of a base material (313) being provided with a film or foil layer (312), in particular a glass fiber laminate, wherein the wells (11) are formed in the film or foil layer (312) and the film or foil layer is covered with a photoresist or a further film or foil layer (311) which is provided with openings (31) and thus forms the cover (3).

13. The carrier plate according to any one of claims 1 to 12, wherein the carrier (1) with the cover (3) can be divided along lines (X-X) extending between neighboring wells (11) into compartments having any desired size and also into individual wells (11).

14. The carrier plate according to any one of claims 1 to 13, wherein all layers (311, 312, 313) forming the carrier plate are made of the same material.

15. The carrier plate according to claim 14, wherein all layers (311, 312, 313) are made of polypropylene or polyethylene.

16. The carrier plate according to any one of claims 1 to 13, wherein the carrier (1) and the cover (3) are made of different materials.

17. The carrier plate according to claim 16, wherein the carrier (1) has one or more layers, and the layer(s) comprise(s) independent of one another preferably glass, silicon, metal or a polymer.

18. The carrier plate according to claim 16 or 17, wherein the cover (3) comprises metal or polymer layers.

19. The carrier plate according to any one of claims 1 to 18, wherein the bottoms (314) of the wells (11) in which the particles (2) are held are sieve-like or porous.

20. The carrier plate according to any one of claims 1 to 19, wherein the carrier (1) and/or the cover (3) is/are provided by means of photolithography, galvanic deposition, mechanical processing, laser treatment and/or etching techniques.

21. Use of a carrier plate according to any one of claims 1 to 20 for applications in the combinatory chemistry.

22. A process for producing a carrier plate for receiving particles (2) in an orderly manner according to any one of claims 1 to 20, comprising the steps:
(a) providing a carrier (1 );
(b) forming at least one well (11 ) in the carrier (1) for receiving the particles (2), wherein the shape and size of the well (11) are selected such that at least two particles (2) can be received simultaneously;
(c) applying a cover (3) on the carrier for holding the particles (2) in the well (11); and
(d) forming at least one opening (31) for each well (11) in the cover (3) in such a way that a particle (2) can be inserted through the opening (31), wherein at least one projecting portion (32) is formed at the opening (31) in such a way that, when the maximally possible particle receiving capacity of each well is reached, all particles (2) are held in each well (11) by the projecting portion (32), wherein the opening (31) is formed to have a diameter essentially corresponding to the diameter of the particle (2).

23. The process according to claim 22, wherein the carrier (1) is made of a base material (313) being provided with a film or foil layer (312), in particular a glass fiber laminate, wherein the wells (11) are formed in the film or foil layer (312) and the film or foil layer is covered with a photoresist or a further film or foil layer (311) which is provided with openings (31) and thus forms the cover (3).

24. A process for introducing particles (2) in an orderly manner into a carrier plate having at least one well (11) for receiving at least two particles (2) simultaneously according to any one of claims 1 to 20, comprising the steps:
(a) applying a plurality of particles (2) onto the carrier plate;
(b) rubbing the particles (2) on the carrier plate into the respective wells (11), wherein due to the size and shape of openings (31) provided in a cover (3) of the carrier plate the particles (2) enter the wells individually; and
(c) rubbing in the particles (2) until a predetermined well capacity of at least two particles (2) is achieved in each well (11) of the carrier plate.

25. The process according to claim 24 for introducing the particles (2) into a carrier plate according to any one of claims 1 to 16.

26. The process according to claim 24 or 25, wherein the particles (2) are made of a resilient and/or swellable material.

## Revendications

1. Plaque support pour une réception ordonnée de particules (2) avec :
a) un support (1) pourvu d'au moins une cavité (11) pour la réception des particules (2), la cavité (11) étant réalisée dans sa forme et sa grandeur pour la réception simultanée d'au moins deux particules (2) et
b) un recouvrement (3) prévu sur le support pour le maintien des particules (2) dans la cavité (11), moyennant quoi au moins une ouverture (31) dans le recouvrement (3) est prévue pour chaque cavité (11) de telle sorte qu'une particule (2) peut être amenée à travers l'ouverture (31), et moyennant quoi au moins une partie (32) en surplomb est conçue de telle sorte que, lorsqu'on atteint la capacité maximale possible de réception de particules pour chaque cavité, toutes les particules (2) sont maintenues par la partie (32) en surplomb dans chaque cavité (11), l'ouverture (31) ayant un diamètre qui correspond sensiblement au diamètre de la particule (2).

2. Plaque support selon la revendication 1, les au moins deux particules (2) étant maintenues en supplément dans les cavités (11) grâce à la réalisation du fond de cavité (113), de la paroi des cavités (112) et/ou au positionnement des particules (2) les unes par rapport aux autres.

3. Plaque support selon la revendication 1 ou 2, les cavités (11) étant disposées dans un modèle qui se répète régulièrement.

4. Plaque support selon l'une quelconque des revendications 1 à 3, le recouvrement (3) étant conçu d'une seule pièce.

5. Plaque support selon l'une quelconque des revendications 1 à 4, la au moins une partie (32) en surplomb étant réalisée sous la forme d'une bague s'étendant sur la cavité (11).

6. Plaque support selon l'une quelconque des revendications 1 à 4, la au moins une partie (32) en surplomb étant réalisée sous la forme d'au moins une saillie s'étendant à la façon d'une nervure sur la cavité (11).

7. Plaque support selon l'une quelconque des revendications I à 6, les parois (112) des cavités (11) étant réalisées avec un angle d'inclinaison de paroi entre environ 20° et 120°, de préférence entre environ 30° et 90° par rapport à l'horizontale.

8. Plaque support selon l'une quelconque des revendications 1 à 7, des parois (112) des cavités (11) étant réalisées au moins en partie de façon concave et/ou convexe.

9. Plaque support selon l'une quelconque des revendications 1 à 8, une section de forme circulaire ou carrée, tournée vers l'ouverture (31), étant attribuée aux cavités (11).

10. Plaque support selon l'une quelconque des revendications 1 à 9, les cavités (11) étant pourvues de parois (112) verticales.

11. Plaque support selon l'une quelconque des revendications 1 à 10, l'ouverture (31) du recouvrement (3) présentant un diamètre compris entre environ 0,01 mm et 1 mm.

12. Plaque support selon l'une quelconque des revendications 1 à 11, le support (1) étant conçu dans un matériau de base (313) doté d'une couche de feuilles (312), en particulier un aggloméré stratifié de fibre de verre, les cavités (11) étant réalisées dans la couche de feuilles (312) et la couche de feuilles étant revêtue d'une laque photosensible ou d'une autre couche de feuilles (311), qui est pourvue des ouvertures (31) et constitue donc le recouvrement (3).

13. Plaque support selon l'une quelconque des revendications 1 à 12, le support (1) pouvant être subdivisé avec le recouvrement (3) le long de lignes (X-X) agencées entre des cavités (11) voisines en compartiment avec une grandeur quelconque en direction d'une seule cavité (11).

14. Plaque support selon l'une quelconque des revendications 1 à 13, toutes les couches (311, 312, 313) constituant la plaque support étant à base du même matériau.

15. Plaque support selon la revendication 14, toutes les couches (311, 312, 313) étant à base de polypropylène ou polyéthylène.

16. Plaque support selon l'une quelconque des revendications 1 à 13, le support (1) et le recouvrement (3) étant constitués à base de différents matériaux.

17. Plaque support selon la revendication 16, le support (1) étant à une ou plusieurs couches et la (les) couches) présentant indépendamment les unes des autres de préférence du verre, du silicium, du métal ou une polymère.

18. Plaque support selon la revendication 16 ou 17, le recouvrement (3) présentant des couches de métal ou de polymère.

19. Plaque support selon l'une quelconque des revendications 1 à 18, les fonds (314) des cavités (11) retenant les particules (2) étant conçus à la façon d'un tamis ou de façon poreuse.

20. Plaque support selon l'une quelconque des revendications 1 à 19, le support (1) et/ou le recouvrement (3) étant mis à disposition par photolithographie, précipitation galvanique, traitement mécanique, usinage au laser et/ou des techniques de décapage.

21. Utilisation d'une plaque support selon l'une quelconque des revendications 1 à 20 pour les besoins de la chimie combinatoire.

22. Procédé pour la fabrication d'une plaque support pour une réception ordonnée de particules (2) selon l'une quelconque des revendications 1 à 20 avec les étapes suivantes
a) mise à disposition d'un support (1) ;
b) réalisation d'au moins une cavité (11) dans le support (1) pour le logement des particules (2), la cavité étant réalisée dans sa forme et sa grandeur pour le logement simultané d'au moins deux particules (2) ;
c) application d'un recouvrement (3) sur le support pour le maintien des particules (2) dans la cavité (11); et
d) réalisation d'au moins une ouverture (31) par cavité (11) dans le recouvrement (3) de telle sorte qu'une particule (2) peut être amenée par l'ouverture (31), moyennant quoi au moins une partie en surplomb (32) est conçue sur l'ouverture (31) de telle façon que, lorsqu'on atteint la capacité maximale possible de réception de particules pour chaque cavité, toutes les particules (2) sont maintenues dans chaque cavité (11) par la partie (32) en surplomb, l'ouverture (31) étant réalisée avec un diamètre qui correspond sensiblement au diamètre de la particule (2).

23. Procédé selon la revendication 22, le support (1) étant conçu dans un matériau de base (313) pourvu d'une couche de feuilles (312), en particulier un aggloméré stratifié de fibre de verre, les cavités (11) étant réalisées dans la couche de feuilles (312) et la couche de feuilles étant revêtue d'une laque photosensible ou d'une autre couche de feuilles (311), qui est pourvue des ouvertures (31) et forme ainsi le recouvrement (3).

24. Procédé pour l'introduction ordonnée de particules (2) dans une plaque support avec au moins une cavité (11) pour la réception simultanée d'au moins deux particules (2) selon l'une quelconque des revendications 1 à 20 avec les étapes suivantes :
a) application d'un grand nombre des particules (2) sur la plaque support ;
b) introduction des particules (2) se trouvant sur la plaque support dans des cavités (11) respectives, les particules (2) étant mises en place individuellement dans les cavités compte tenu de la grandeur et de la forme d'ouvertures (31) prévues dans un recouvrement (3) de la plaque support ; et
c) introduction des particules (2) jusqu'à ce qu'une capacité de cavité prédéfinie d'au moins deux particules (2) soit atteinte jusque dans chaque cavité (11) de la plaque support.

25. Procédé selon la revendication 24 pour l'introduction des particules (2) dans une plaque support selon l'une quelconque des revendications 1 à 16.

26. Procédé selon la revendication 24 ou 25, les particules (2) étant formées dans un matériau élastique et/ou gonflant.
